(19) Europäisches Patentamt
European Patent Office
Office européen des brevets

(11) **EP 3 632 564 A1**

(12) **EUROPEAN PATENT APPLICATION**

(43) Date of publication:
**08.04.2020 Bulletin 2020/15**

(51) Int Cl.:
***B01L 3/00*** *(2006.01)*  ***B82Y 20/00*** *(2011.01)*
***G01N 15/14*** *(2006.01)*  ***G01N 21/03*** *(2006.01)*

(21) Application number: **19171651.3**

(22) Date of filing: **29.04.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.10.2018 EP 19198040**

(71) Applicant: **Thomson Licensing
35576 Cesson Sévigné Cédex (FR)**

(72) Inventors:
• **BORISKIN, Artem
35576 CESSON-SEVIGNE (FR)**
• **TOWN, John
35576 CESSON-SEVIGNE (FR)**
• **LEE, Sean
35576 CESSON-SEVIGNE (FR)**

(74) Representative: **Vidon Brevets & Stratégie
16B, rue de Jouanet
BP 90333
35703 Rennes Cedex 7 (FR)**

(54) **SYSTEM FOR OPTICAL DETECTION AND IMAGING OF NANOSCALE OBJECTS**

(57)    An optical system for use in detecting and imaging at least one nanometric object (12) is disclosed, which comprises:
- at least one microfluidic channel (10) adapted to be filled in or travelled across by a fluid medium (11) comprising nanometric objects (12), said channel being delimited by at least a bottom wall ($15_1$) and a ceiling wall ($15_2$) positioned opposite to and facing the bottom wall, said bottom wall comprising a transparent substrate;
- at least one nanojet focusing element (NJFE) (13) designed in a form of a surface feature of at least a part of the bottom wall facing the ceiling wall;
- a light source arranged in such a manner that it illuminates the at least one nanojet focusing element (NJFE) through the transparent substrate of the bottom wall and thereby focuses the light as a photonic nanojet (14) inside the fluid medium between the bottom wall and the ceiling wall; and
- light detection means arranged to measure the light scattered or induced by a nanometric object (12) hit by a photonic nanojet (14), the light scattered or induced returning to the light detection means by first passing through the at least one nanojet focusing element (NJFE) (13).

**Fig. 1A**

EP 3 632 564 A1

**Description**

**1. Technical Field**

The present disclosure relates to microfluidics and optical detection methods, more particularly for real-time detection and imaging of nanometric objects in fluidic media. More precisely, the present disclosure relates to a new solution for a microfluidic device with integrated means for enhanced optical detection and imaging of nanoscale objects, based on the use of nanojet (NJ) microstructures.

**2. Background**

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

The ability to detect and image nanoscale objects in solutions is of interest for biomedical diagnostics, bio/chemical sensing, environmental monitoring, chemistry and material science. In particular, it may concern a real-time detection of nanoparticles, fluorescent molecules, proteins, viruses, and subwavelength cells in water-based medium. Detection of such nanoscale objects is very challenging due to their small size and weak light-matter interaction. The signal to noise ratio can be enhanced using metal nanoparticles (NP) capable of supporting plasmonic resonances. A footprint of a biological object attached to a plasmonic NP can be read in a more reliable manner.

There is a number of micro-optics solutions available for microfluidic devices, as described for example by H. Yang et al. in « Micro-optics for microfluidic analytical applications », Chem. Soc. Rev., 47,1391-1458 (2018).

However, they operate in the far field zone and thus have resolution limited by the Abbe diffraction limit.

Another limitation of conventional detection systems is associated with their limited capacity for parallel detection, as underlined by J. Lim et al. in "Micro-optical lens array for fluorescence detection in droplet-based microfluidics », Lab Chip 13, 1472-1475 (2013). Optical systems with a high numerical aperture such as photomultipliers can offer sufficient sensitivity, but a multipoint measurement is difficult to achieve. On the opposite, small numerical aperture objectives with a large field of view allow for parallelization, but their optical sensitivity is limited.

New methods of direct signal-enhanced optical detection are wanted to boost development of more reliable, affordable and portable devices for medical diagnostic and bio/chemical sensing. In this context, a special interest is paid to microfluidic lab-on-a-chip (LoC) sensors.

Conventional optics permits detection of relatively large objects because the scattered light intensity decreases rapidly with decreasing dimensions of the object. The light collection capability of a standard microscope objective is limited by its numerical aperture. Objectives with high numerical aperture are bulky and expensive. Several near-field techniques enabling manipulation of objects below 100 nm have been developed to trap and detect nanoparticles and subwavelength cells that can overcome the diffraction limit and avoid the use of bulky structures as conventional confocal microscopes. Among those are photonic crystal sensors (see e.g. Y. Liu et al. « Photonic crystal-based all-optical on-chip sensor », Opt Express 20(18), 2012), plasmonic sensors (see e.g. O. Tokel et al. « Portable microfluidic integrated plasmonic platform for pathogen detection », Nature Sci Rep. 5, 9152 (2015)) and microsphere-based photonic nanojet sensors, as described by H. Yang et al. in "Photonic nanojet array for fast detection of single nanoparticles in a flow », NanoLetters 15(3), 1730-1735 (2015). The latter is very attractive thanks to its sub-diffraction resolution, low cost, and relatively simple fabrication.

Photonic nanojet (NJ) is a tightly confined optical beam with transversal dimensions nearly equal or even smaller than diffraction limit, which appears in the shadow region of a spherical microparticle illuminated by a plane wave, provided its diameter is larger than wavelength $\lambda$ and refractive index contrast relative to the host medium is less than about 2:1.

NJ microspheres can enhance the backscattering of visible light by nanometer-scale particles located within the jets by several orders of magnitude. They can also be used to detect fluorescent molecules in solution and selective trapping and manipulation of nanoparticles and cells from human blood solutions. Recently, an array of NJ microspheres was used to build an integrated optical microfluidic chip enabling real-time detection of nanoparticles immersed in a fluid, as described in patent document WO2016020831A1.

In spite of high focusing efficiency provided by dielectric microspheres, their use in microfluidic devices is associated with certain difficulties, namely:

  ○ Fabrication of microspheres in high index material, i.e. doped glass,
  ○ Precision molding of chip counterparts with patterned surfaces comprising surface features with significant difference in terms of depth, i.e. microchannels used for guiding a fluid and microwells used for hosting the microspheres,
  ◦ Assembly of the device, especially as regards placing a microsphere in each microwell.

The solution proposed in patent document WO2016020831A1 requires fabrication of surface features (i.e. channel and wells) with a large difference in depth. In addition, it requires precise manipulation of microspheres with diameter of a few microns that need to be placed in each microwell. This may cause certain difficulties for serial production.

Furthermore, the focusing capability of microspheres depends on the ratio between the refractive index of the microsphere material and that of the host medium. Although plastic microspheres are relatively cheap and commercially available, their refractive index is close to that of water that does not allow to generate nanojets in a fluid. On the opposite, fabrication of high-precision microspheres in high-index material (e.g. doped glass) with diameter fitting the microwell dimensions is difficult and costly.

Resolving these issues may open the door for more affordable microfluidic devices with integrated means for optical read-out enabling real-time detection and imaging of nanometric objects of environmental or biological importance, such as nanoparticles, viruses, or other biological agents.

It would hence be desirable to introduce a method and device capable of real-time detection and imaging of nanoscale objects in a fluid that will rely on the nanojet focusing phenomenon but does not comprise microspheres.

### 3. Summary

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

In one aspect, an optical system for use in detecting and imaging at least one nanometric object is disclosed, which comprises:

- at least one microfluidic (MF) channel adapted to be filled in or travelled across by a fluid medium comprising nanometric objects, said channel being delimited by at least a bottom wall and a ceiling wall positioned opposite to and facing the bottom wall, said bottom wall comprising a transparent substrate;
- at least one nanojet focusing element (NJFE) designed in a form of a surface feature of at least a part of the bottom wall facing the ceiling wall;
- a light source arranged in such a manner that it illuminates the at least one nanojet focusing element (NJFE) through the transparent substrate of the bottom wall and thereby focuses the light as a photonic nanojet inside the fluid medium between the bottom wall and the ceiling wall; and
- light detection means arranged to measure the light scattered or induced by a nanometric object hit by a photonic nanojet, the light scattered or induced returning to the light detection means by first passing through the at least one nanojet focusing element (NJFE).

Hence, the present disclosure provides an optical system for use in detection and imaging of a plurality of nanometric objects by using at least a Nanojet Focusing Element (NJFE) producing at least one focused optical beam in a near field zone, referred as photonic nanojet (NJ). The proposed system comprises at least a microchannel that can be filled in with a fluid embedding at least one nanometric object, at least one NJFE formed on a surface of the microchannel, and uses an optical detection method based on the photonic nanojet phenomenon. Thus, as compared with the prior art solution disclosed in patent document WO 2016020831A1, the microspheres, which present a set of drawbacks, are replaced with nanojet focusing elements, which are much easier to manufacture as surface features of the microchannel.

Actually, the microspheres, which were arranged on top of microwells formed in the bottom wall of the microchannel, are replaced with a moldable single-material microstructure capable of producing at least one focused beam in the near zone, so-called nanojet. The nanojet focusing elements are indeed directly integrated and designed within the structure of the microchannel walls. The disclosed optical system hence provides for simpler fabrication and assembly, thanks to a single-material topology, monolithic structure (i.e. no moving elements, like microspheres), and compatibility with standard microfabrication methods.

As will be apparent from the following, the proposed system can be used for real time parallel detection of nanoscale objects of environmental or biological importance, such as nanoparticles, viruses, or other biological agents. It provides a multi-fold enhancement of the signal level, is compatible with standard far-field optical devices (e.g. microscopes), and can be fabricated using established microfabrication methods such as precision molding.

The proposed method and device for optical read-out in microfluidic devices is hence characterized in:

- Being capable of real-time detection and imaging of nanometric objects in fluids,
- Exploiting the nanojet near-field focusing phenomenon,
- Being compatible with standard micro-fabrication methods,
- Not relying on the use of microspheres, whose fabrication and placement in a microfluidic device is difficult.

The proposed optical system has a form of a microfluidic chip comprising at least a microchannel intended to be filled in by a fluid and a microstructure characterized in that:

◦ it is provided on a surface of said microfluidic channel,
◦ it comprises at least one NJ focusing element (NJFE), said NJFE comprising at least one concavity (groove or cavity) designed so that its geometry prevents the fluid from entering the concavity of the microstructure,
◦ it is capable of generating at least one focused beam in a near zone inside the microchannel characterized by (i) full width at half-power is equal or smaller than ½ wavelength in the fluid medium and (ii) the field intensity enhancement in the focal point is at least a factor of two compared to the incident wave.

In another aspect, the surface feature comprises at least one central protruding element made of a same material as the transparent substrate and at least one concavity adjacent to the central element and filled with a dielectric material which refractive index is lower than that of the transparent substrate.
In another aspect, the central element of the surface feature has a form belonging to the group comprising:

- a cylindrical or conical pillar with an arbitrary cross-section described by a simple closed curve; or
- a rib with a straight or curved edge line whose length is much larger than the rib width defined as the distance between the two edge lines of said rib;

and the pillar and/or rib is made of a dielectric material with refractive index $n_1$ and delimitated or surrounded by a groove or cavity filled in with a dielectric material having a refractive index $n_2$ smaller than that of the pillar or rib ($n_2<n_1$).
In another aspect, the optical system also comprises at least one nanojet focusing element (NJFE) designed in a form of a surface feature of at least a part of the ceiling wall facing the bottom wall, and both nanojet focusing elements formed on the ceiling wall and on the bottom wall are used respectively for illumination of the nanometric objects and read-out of the light scattered or induced by said nanometric objects.
In another aspect, the optical system comprises an array of nanojet focusing elements formed on said bottom wall and/or on said ceiling wall.
In yet another aspect, said nanojet focusing elements in said array are arranged so that a nanometric object traveling across said microfluidic channel passes over at least one nanojet focusing element.
In other words, a shift in the positioning of the rows is introduced to assure that any trajectory of an object traveling along the microchannel intersect at least one NJ beam generated by at least one NJFE of the array.
In another aspect, dimensions of said array of nanojet focusing elements extend across an entire width of said microfluidic microchannel. In principle, the array may have any type of a lattice (e.g. rectangular, triangular or hexagonal).
In another aspect, a pitch of said array is targeted to be between one and ten wavelengths of an incident light produced by said light source.
This provides an optimal trade-off between the light coupling efficiency for the entire surface of the texture and the power density enhancement inside each individual feature. This also provides a certain degree of freedom for changing the wetting properties of the NJFE array surface.
In another aspect, such an optical system comprises at least two parallel microfluidic (MF) channels adapted to be filled in or travelled across by a fluid medium comprising nanometric objects, each microfluidic channel comprising an array of nanojet focusing elements, and said light source illuminates said at least two parallel microfluidic (MF) channels.
Both microfluidic channels may be simultaneously observed by an optical mean, e.g. microscope with a low-NA objective. In this configuration, the proposed device can be used for parallel detection.
In yet another aspect, said array of nanojet focusing elements is formed on said bottom wall and/or said ceiling wall by one of the techniques belonging to the group comprising:

- molding; (i.e. fabricated simultaneously with fabrication of either base or cover layer)
- lithography; (e.g. using a direct write or mask UV lithography)
- deposition of dielectric particles or microstructures on a surface of said microfluidic channel. (e.g. using sputtering or crystal growing method)

The former (molded and lithography-based NJFE arrays) are more likely to have a regular pattern, whereas the latter is more likely to have a random or fractal-type pattern. More generally, providing a surface of the channel with NJFE elements may be performed by molding, engraving, embossing, casting, or ablation of said surface, which are known techniques already used in mass production.

In another aspect, the distance ($H_c$) between the ceiling wall and the bottom wall is equal to or smaller than four times a longitudinal dimension ($L_b$) of the photonic nanojet.

According to an embodiment, said central element has a form belonging to the group comprising:

- a cylindrical or conical pillar with an arbitrary cross-section described by a simple closed curve; (so-called Jordan curve) such as circle, oval/ellipse, rectangle, pentagon, hexagon, octagon, cross-shape, etc. or
- a rib with a straight or curved edge line whose length is much larger that the rib width defined as the distance between the two edge lines of said rib;

and said pillar and/or rib is made of a dielectric material with refractive index $n_1$ and delimitated or surrounded by a groove or cavity filled in with a dielectric material (gas, gel, solid) having a refractive index $n_2$ smaller than that of the pillar or rib ($n_2 < n_1$).

Geometry of the NJFE (e.g. width of the groove/cavity) prevents the fluid from filling in the concavity of the surface feature (groove or cavity). Hence, the fluid flows on top of the low-index region surrounding the protruding central element of the NJFE. It must be noted that bottom and top edge lines correspond to the lines between the base and lateral surface and between top and lateral surfaces, respectively.

In one further aspect, a dimension of said central element in a direction of propagation of said incident light is targeted to be between half of the wavelength of the incident light and a few wavelengths of the incident light in the dielectric material forming said nanojet focusing element.

In another aspect, said surface feature comprises two or more pillars arranged close to each other inside a cavity or delimitated by a single groove. Such a sub-array of at least two pillars is used to produce a longer photonic nanojet appearing as a result of constructive interference between the NJ beams produced by each individual pillar.

In yet another aspect, said nanojet focusing element comprises a group of two or four pillars with a spacing S between said pillars being in the range of $\lambda/10 < S < \lambda/2$, where $\lambda$ is wavelength of the incident light in the dielectric material forming said pillars.

According to an alternate embodiment, said surface feature is formed by at least a concavity (groove or cavity) with a straight or curved edge line on the bottom wall.

In one aspect, said concavity is filled in with:

- an homogeneous dielectric medium having a refractive index lower than that of the bottom and/or ceiling wall; (e.g. gas, gel, solid dielectric material) or
- a composite dielectric material being a mixture of at least two dielectric materials having different indexes of refraction.

The effective refractive index of such a composite material is controlled by varying morphology of inclusions of one dielectric material into another. In one embodiment, such a composite material can be made by creating a narrow groove or cavity in a bulk dielectric material. Instead, a wide groove or cavity can be filled in with at least one narrow rib or pillar with dimensions smaller than $\lambda/3$.

In both cases (with narrow groove or the grooves filled with an effective index composite material), the geometry of the NJFE is selected so that:

  ◦ it is capable of generating at least one focused beam in a near field zone (i.e. photonic nanojet) and
  ◦ it enables the fluid to flow on top of the low-index region surrounding the central protruding element of the NJFE without filling entirely the grooves (cavities). The desired hydrophobic behavior is provided by optimizing geometry of the grooves (cavities) as well as varying morphology of the inclusions and relative air fraction of the effective index composite material (see **Appendix B** for details).

In one embodiment, the desired hydrophobic wetting regime is provided by:

  ◦ creating narrow grooves (cavities) with dimensions ~ $\lambda/2$, or
  ◦ filling wider grooves (cavities) with an effective index medium comprising plurality of pores, posts, and/or ribs with dimensions smaller than $\lambda/3$ and air-filling factor of varying between ~15 to 85%.

The hydrophobic properties of microtextures comprising plurality of cylindrical pillars and cavities were previously studied and reported experimental data confirm a principle possibility for fabricating microtextures with desired dimensions and wetting behavior.

In other words, the proposed optical system relies on the following three phenomena:

○ near-field focusing by edge diffraction that underlay formation of a focused optical beam in a near zone of a dielectric microstructure, known as photonic nanojet (NJ),
○ hydrophobic wetting behavior of microtextures, and
○ effective index model for composite dielectric materials that can be used as a low-index filler for the groove/cavity surrounding a central pillar of a NJ focusing element enabling the NJ focusing phenomenon and, simultaneously, providing the desired wetting properties of the surface supporting the NJ focusing elements, namely preventing the fluid from entering the grooves/cavities surrounding the pillars.

In an exemplary embodiment, the transparent substrate associated with the bottom wall is made of a visibly-transparent material such as:

○ Plastic, e.g. PC (polycarbonate), COC (cyclic olefin copolymer), or PMMA (Polymethyl methacrylate), PP (Polypropylene), PE (polyethylene), polytetrafluoroethylene (PTFE), etc.;
○ Organic polymer, e.g. PDMS (Polydimethylsiloxane);
○ Glass.

The NJFE may be made of:

○ the same material as used for the substrate (intrinsic to molding or direct write fabrication methods);
○ photopolymer (intrinsic to lithography fabrication methods);
○ another at least partly transparent dielectric material (deposited by sputtering / crystallization, etc.).

The fluid medium may be, for example, an aqueous solution or a blood sample.

The nanometric object to be detected and imaged by the claimed optical system may be:

○ a biological object like a complex molecule (proteins, DNA, etc.);
○ a virus;
○ a nanoparticle (e.g. a plasmonic nanoparticle made of gold, silver, etc.).

In one embodiment, the light source is a laser source, a narrow-band fluorescence source or a broad-band white light source. The light detection means is an optical microscope integrated with a charge coupled device camera and/or a spectrometer, CMOS (complementary metal-oxide-semiconductor) image sensors, or CMOS-based avalanche photo diodes.

According to an embodiment of the present disclosure, the propagation direction of said incident light forms an angle comprised between 70° and 110° with the array plane.

## 4. Brief description of the drawings

The present disclosure can be better understood with reference to the following description and drawings, given by way of example and not limiting the scope of protection, and in which:

- **Figure 1** shows a generic view of the proposed optical device operating in two different modes: (a) reflection mode with light source and optical detection means below the channel, (b) transmission mode with a light source and detection means on the opposite sides of the channel;
- **Figure 2** shows a top view on an array of NJFEs provided on a bottom surface of the microchannel;
- **Figure 3** shows a cross-sectional view of a NJ focusing element in a form of circular cylinder: geometry and notations;
- **Fig. 4** is a top view of a NJFE in a form of a cylindrical pillar with different cross-sections: (a) circular, (b) rectangular, (c) arbitrary-shaped. Red circles indicate cross-section of the NJ beam(s) generated by the pillar from an electromagnetic wave incident on the NJFE from the image plane;
- **Fig. 5** is a top view of a NJFE in a form of a rib with different shape of edge lines: (a) straight, (b) curved with parallel edges, (c) curved with non-parallel edges;
- **Fig. 6** is a top view of a NJFE comprising a set of cylindrical pillars with different cross-sections embedded in a single cavity: (a) circular pillars, (b) rectangular;
- **Fig. 7** is a top view of a NJFE in a form of a cavity with different cross-sections: (a) gear-shape cavity, (b) curved groove, (c) set of four cylindrical cavities;

- **Fig. 8** is a top view of a NJFE in a form of a cylindrical pillar (a-e) and a rib (f) with a cavity filled in with an effective index composite medium in a form of: (a) concentric rings, (b) pins, (c) rib & pins, (d) a set of cylindrical cavities, (e, f) stratified medium comprising plurality of parallel ribs and grooves;
- **Fig. 9** illustrates a side view of a NJFE provided on a bottom surface of a microfluidic channel filled with a fluid medium. The grooves are partly filled with air shown in white color;
- **Figures A1 to A5** are prior art drawings described in **Appendix A** and relating to the nanojet fundamentals;
- **Figures B1 to B4** are drawings described in **Appendix B,** relating to the composite dielectric materials & effective index model. More precisely:

  ○ **Fig. B1** presents a schematic drawing of a NJ focusing element ML in a form of combination of two adjacent blocks of dielectric material, one solid and one compound;
  ○ **Fig. B2-A and B2-B** illustrate two alternative embodiments of a compound material: (a) porous material with randomly sized and spaced inclusions, (b) stratified material with a regular pattern of alternating layers of two dielectric materials;
  ○ **Fig. B3-A and B3-B** illustrate an exemplary embodiment of a NJ focusing element in a form of a cavity filled with air ($n_1=1$) and a block of composite material in a form of parallel ribs/groove embedded in a host medium with refractive index $n_2>n_1$;
  ○ **Fig. B4-A to B4-E** provide exemplary embodiments for a block of a composite material in a form of: (a) parallel ribs, (b) rectangular pillar, (c) cylindrical pillars, (d) rectangular cavities, (e) cylindrical cavities.

The components in the figures are not necessarily to scale, emphasis instead being placed upon illustrating the principles of the invention.

## 5. Detailed description

The present disclosure thus presents a new application of nanojet (NJ) microstructures that were first introduced in patent document WO2017162881 by the same inventors as the present application. NJ microstructures are used here for creating a microfluidic device with a mean for optical detection and imaging of nanometric objects.

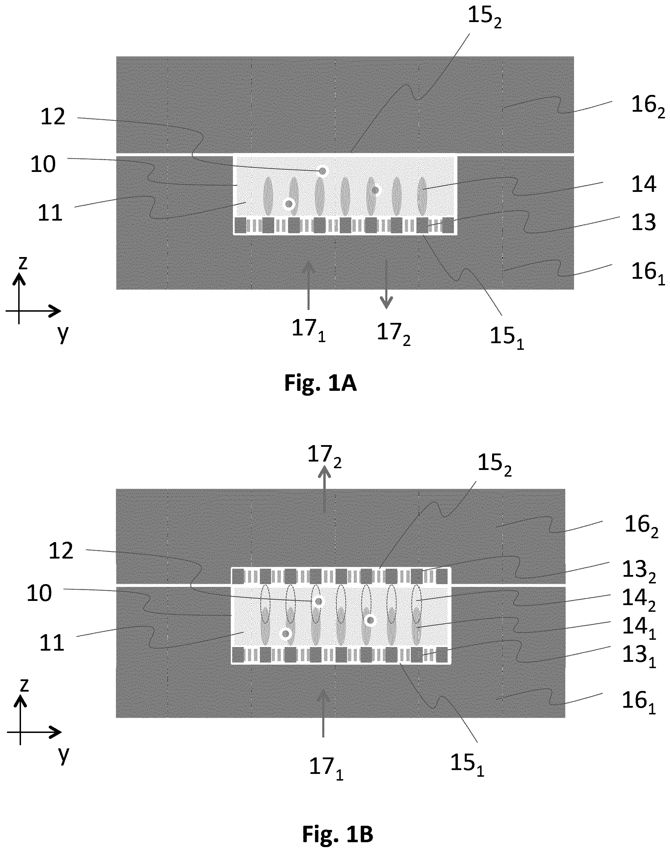

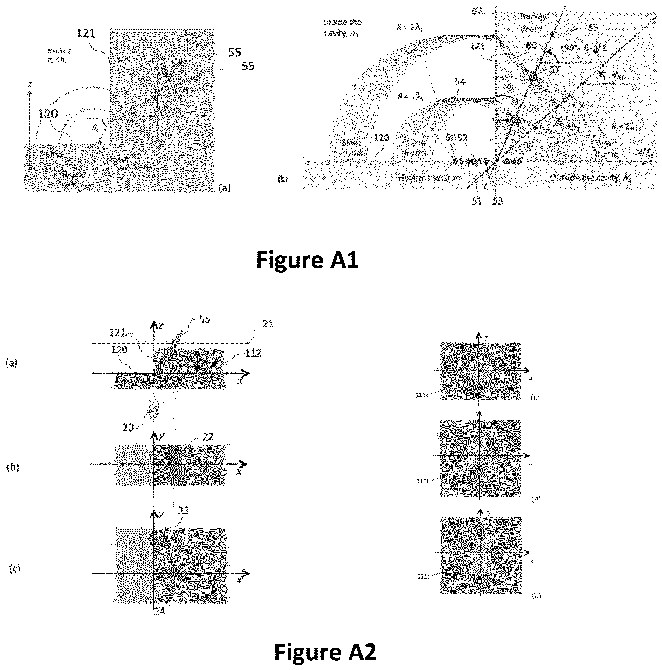

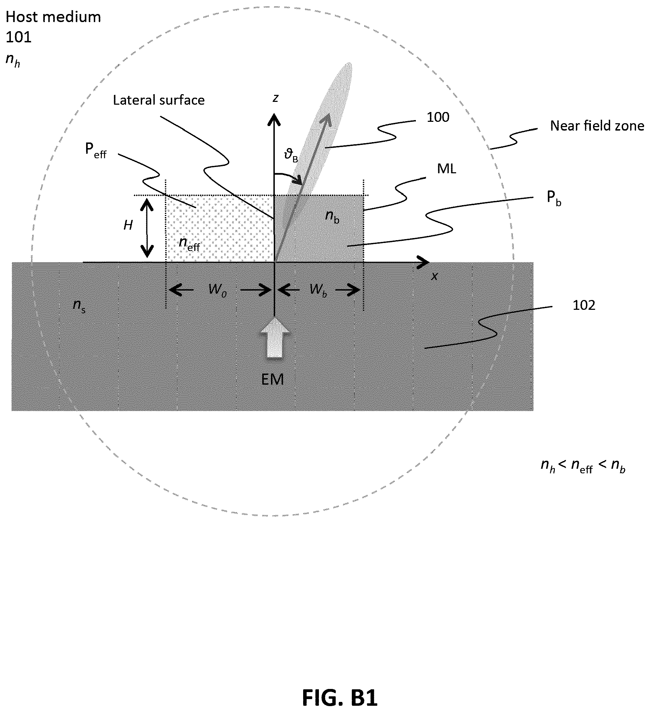

In accordance with an aspect of the present disclosure, and as illustrated in **figure 1A,** a surface of a microchannel 10 is covered with a texture in the form of a microstructure 13 comprising plurality of wavelength-scale features capable of generating at least one condensed optical beam, so-called nanojet (NJ) 14, from an incident EM wave $17_1$, e.g. laser light. The size and shape of individual features are selected with respect to the wavelength of the incident EM wave $17_1$ and are tuned to provide control over the shape and position of the high intensity spot associated with individual NJ beams 14. Finally, the microstructure 13 is designed to diffract an incident EM wave $17_1$ into a plurality of condensed optical beams, i.e. nanojets 14, that are used for excitation of nanometric objects 12 present in a fluid medium 11 filling the channel 10.

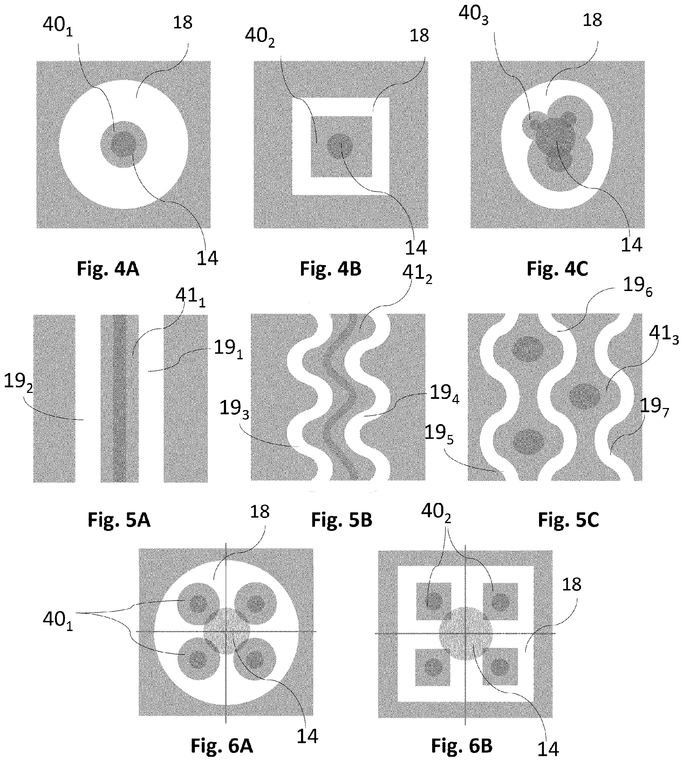

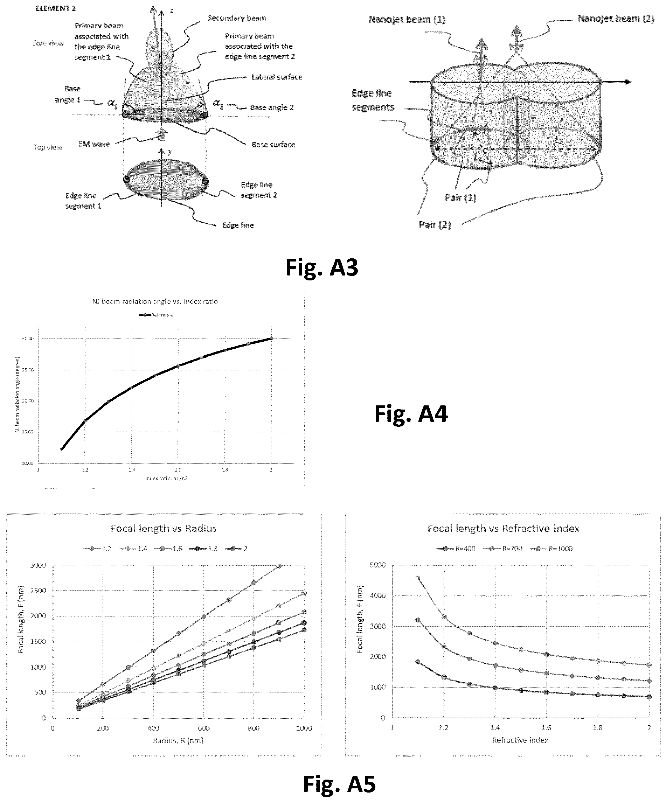

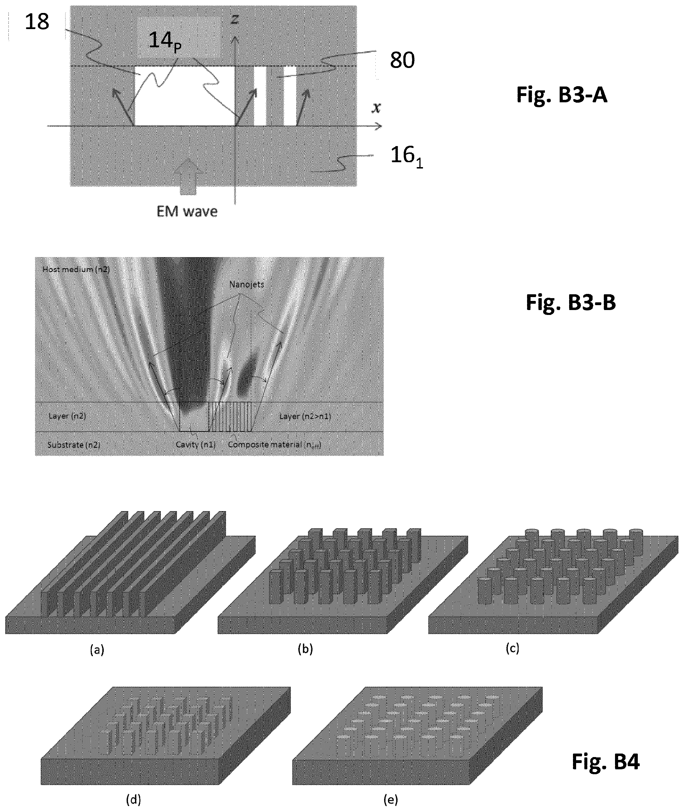

Each nanojet focusing element (NJFE) 13 may take the form of a pillar or a rib, which size and shape, as well as dimensions of the surrounding groove/cavity, define the focusing ability of NJFEs as well as the wetting properties of the NJFE array surface. The shape of the pillar can be selected rather arbitrarily. For instance, it may have a shape of a cylinder or cone with a circular or rectangular cross-section. Other shapes are also possible, as illustrated in **figures 4 to 9.**

In a preferred embodiment, the proposed optical device:

- is made in a plastic material with refractive index $n_1<2$, e.g. COC (cyclic olefin copolymers), PC (polycarbonate), or PMMA (poly-methyl methacrylate);
- illuminated by a laser source operating in the visible range, e.g. $490nm<\lambda_0<520nm$, where $\lambda_0$ is the free space wavelength,
- has at least one microstructure feature provided at a surface of the channel 10 characterized by the following features:

  ○ it comprises a central protruding element in the form of a cylinder, cone, prism or cuboid with an arbitrary cross-section surrounded by a concavity (groove or cavity) filled with a dielectric material having refractive index lower than that of the central element ($n_2<n_1$),
  ○ its height (depth) is in the range of $\lambda/2 <H< 5\lambda$, where $\lambda$ is the wavelength in the structure material, $\lambda= \lambda_0/n_1$,
  ○ its height-to-width aspect ratio is in the range of about 1:1 to 1:4.

In case of a cone, the base (slant) angle can vary in the range of 60 to 120 degrees, which means that it can have a narrow tip oriented towards the positive or negative z-axis direction.

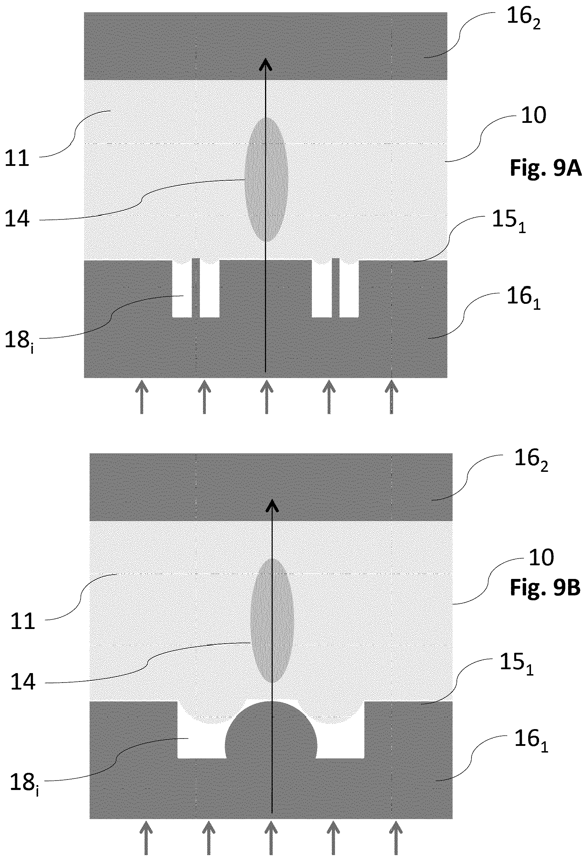

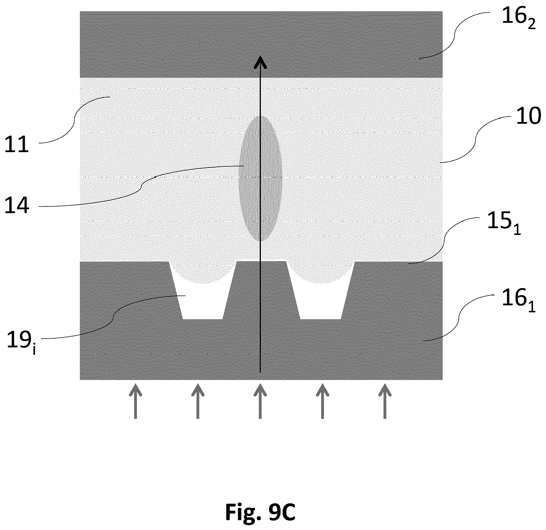

In all cases, the at least one NJ beam generated by the surface feature appears inside the channel 10, as schematically shown in **Fig. 9.**

Note that, as described in patent document EP3312660*,* the focal length of NJFE is a function of its base dimensions (see **Appendix A** for details). Thus, the optimal height-to-width ratio (H/D) depends on the refractive index ratio between the pillar/rib material and that of the medium filling the groove (cavity) delimitating this pillar. The smaller the contrast between the two, the longer the longitudinal dimension of the NJ beam generated by the feature. The H/D ratio and channel depth ($H_c$) are to be adjusted accordingly. In case of an effective index composite medium, the refractive index of the medium filling the groove/cavity is defined as $n_2 = n_{eff}$, where $n_{eff}$ is an effective refractive index defined as explained in **Appendix B.**

Also note that the optical focusing by a dielectric microstructure will occur for a wider range of pillar dimensions, so that the NJ beam forming phenomenon may also be achieved with a wide range of pillar shapes and dimensions and/or in a wider wavelength range. Important, the non-resonant nature of the NJ beam-forming phenomenon allows to use the same NJ microstructure in a wide wavelength range. E.g. being designed for a wavelength of ~500nm, the same NJ microstructure can operate in a wider wavelength range, i.e. entire visible range, provided the index ratio condition $n_2 < n_1$ is satisfied and transparency of the structure material at a selected wavelength is sufficient for transmission-through imaging.

In a preferred embodiment, the proposed optical device is fabricated as illustrated in **Fig. 1A** - **1B,** namely: two plastic parts (base $16_1$ and cover $16_2$) are sealed together forming a microchannel 10 with an array of NJFE 13 provided on its bottom surface $15_1$. The fluid medium 11 is placed in, or traverses across the channel above the array of NJFE 13. The light source (not shown) is placed so that the light $17_1$ is incident on the device from below so that it first passes through the transparent substrate $16_1$ associated with bottom wall $15_1$, then reaches the NJFE array 13 where it is diffracted forming a plurality of nanojet beams 14 associated with individual NJFE, said NJ beams 14 extend across the channel. The back-reflected, scattered, or induced light from a nanometric object 12 hit by a NJ beam 14 is first passing through a NJFE 13 and then is detected ($17_2$) by an optical mean placed either below (**fig. 1A**) or above (**fig. 1B**) the device.

The proposed device is based on the NJ optical phenomenon but does not use microspheres. Instead, it relays solely on the use of patterned microstructures that can be molded on a surface of a microchannel. This simplifies fabrication/assembly of microfluidic devices. It also prevents a possible failure of the device due to an occasional displacement of a microsphere from its pocket (microwell) during the use.

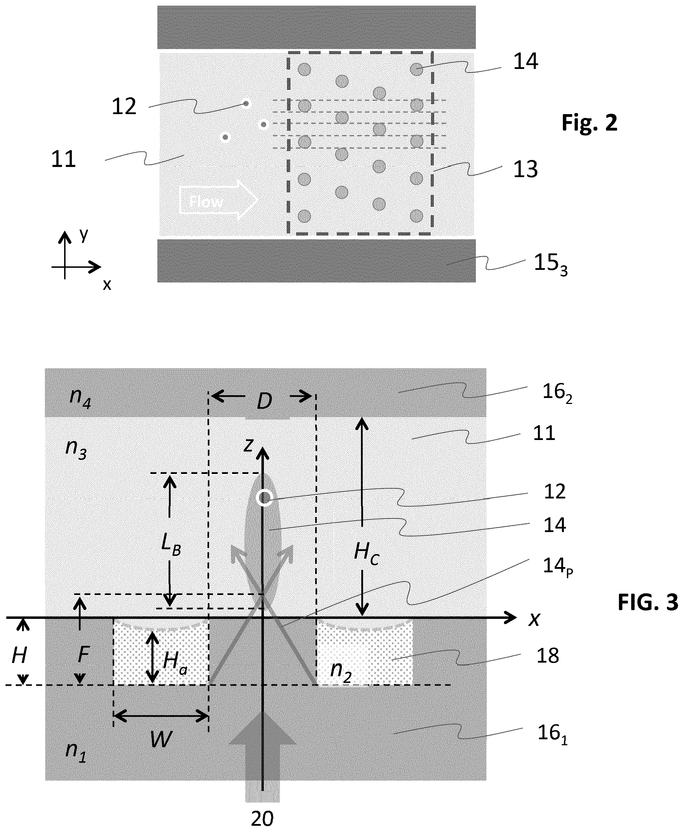

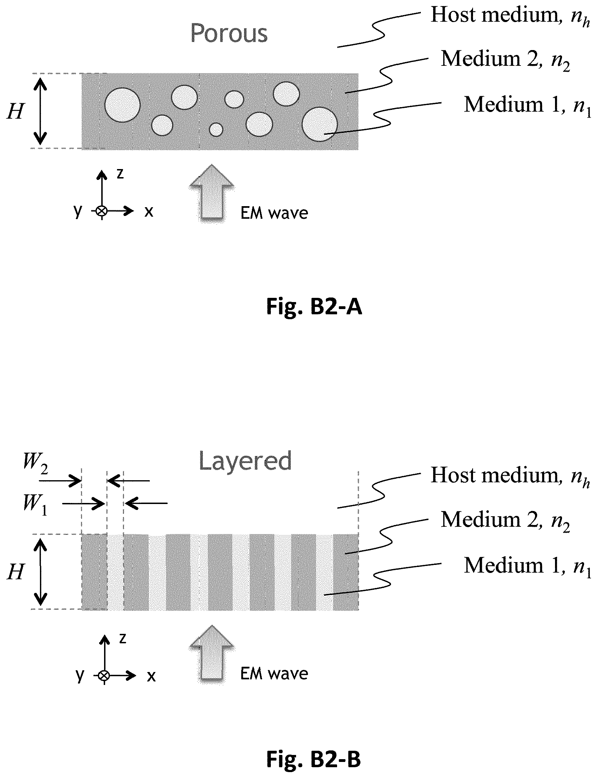

Such a patterned microstructure may take the form of an array of NJFE, which can be regular or not. In the embodiment of **fig. 2,** which shows a top view of an array of NJFEs provided on a bottom surface $15_1$ of the microchannel 10, NJFEs 13 are arranged so that a nanometric object 12 travelling across the channel 10 passes over at least one NJFE 13. The channel 10 is delimited by side walls $15_3$.

**Fig. 3** shows a cross-sectional view of a NJ focusing element 13 in a form of circular cylinder and provides geometry and notations, which are to be used throughout the present document. The circular cylinder with diameter D is surrounded by a cavity 18 formed in the base $16_1$ with refractive index $n_1$. The cavity 18 is filled with a material with refractive index $n_2$. The height of the circular cylinder is H. F designates the focal length of the nanojet focusing element, corresponding to the point where the primary nanojets $14_P$ intersect to give birth to the nanojet 14. The distance $H_c$ between the ceiling wall $15_2$ and the bottom wall $15_1$ is preferably equal to or smaller than four times a longitudinal dimension ($L_B$) of the photonic nanojet 14. The channel 10 is filled in with a fluid with refractive index $n_3$. Thanks to the hydrophobic properties of the cavity 18, such a fluid 11 does not fill it in, but only partly enters cavity 18. At the lowest point, the height of the cavity 18 empty of any fluid 11 is $H_a$. The cover $16_2$ has a refractive index $n_4$, which may be the same or not as the refractive index $n_1$ of the base $16_1$.

In other embodiments, the NJ focusing element 13 may take other forms or shapes of pillars, as illustrated by **Fig. 4A-4C.** Actually, the NJ focusing element 13 may take the form of a cylindrical or conical pillar 40 with an arbitrary cross-section described by a simple closed curve (so-called Jordan curve) such as a circle, an oval/ellipse, a rectangle, a pentagon, hexagon, octagon, cross-shape, etc. On **figure 4A,** the NJFE 13 has a form of a cylindrical pillar with a circular cross-section $40_1$, surrounded by a cylindrical cavity 18. On **figure 4B,** the NJFE 13 has a form of a cylindrical pillar with a rectangular cross-section, surrounded by a rectangular cavity 18. On **figure 4C,** the NJFE 13 has a form of a cylindrical pillar with an arbitrary-shaped cross-section (corresponding to the merging of three circular cylinders of different diameters), surrounded by an arbitrary-shaped cavity 18. Circles with reference numeral 14 indicate cross-section of the NJ beam(s) generated by the pillar from an electromagnetic wave incident on the NJFE 13 from the image plane.

In other embodiments, instead of a pillar, the NJFE 13 may take the form of a rib with different shape of edge lines, as illustrated by **fig. 5A-5C.**

**Fig. 5A** shows a rib $41_1$ with a straight edge line delimitated by two grooves $19_1$ and $19_2$. **Fig. 5B** shows a rib $41_2$ with a curved edge line delimitated by two curved grooves $19_3$ and $19_4$ with parallel edges.

According to an embodiment, the protruding elements in the form of pillars or ribs are merged together to form a layer comprising a plurality of hollow cavities (e.g. filled in with air). This is illustrated in **Fig. 5C,** representing a series of pillars connected by 'bridges' and thus forming ribs $41_3$ with curvilinear edge lines delimitated by grooves $19_5$-$19_7$.

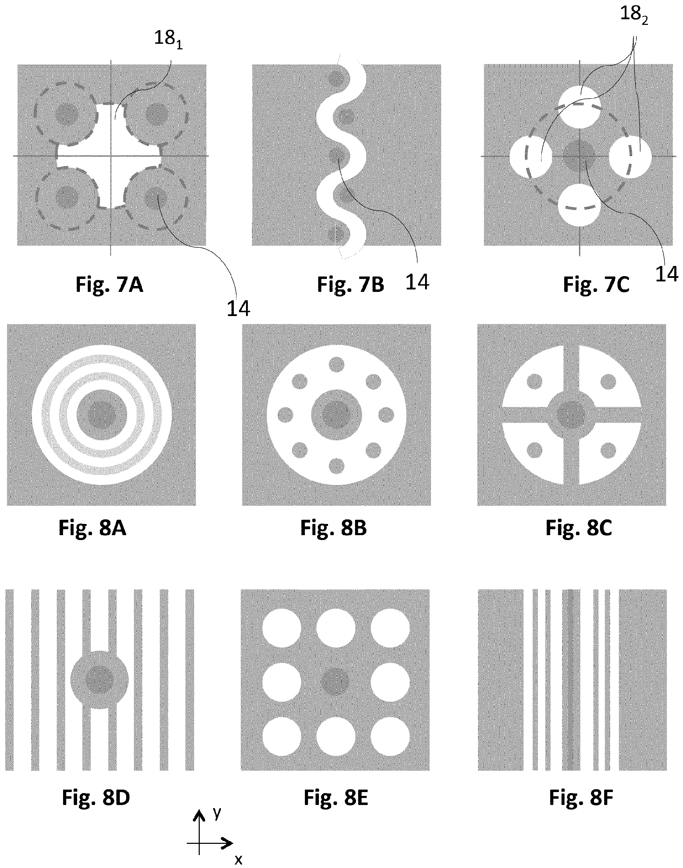

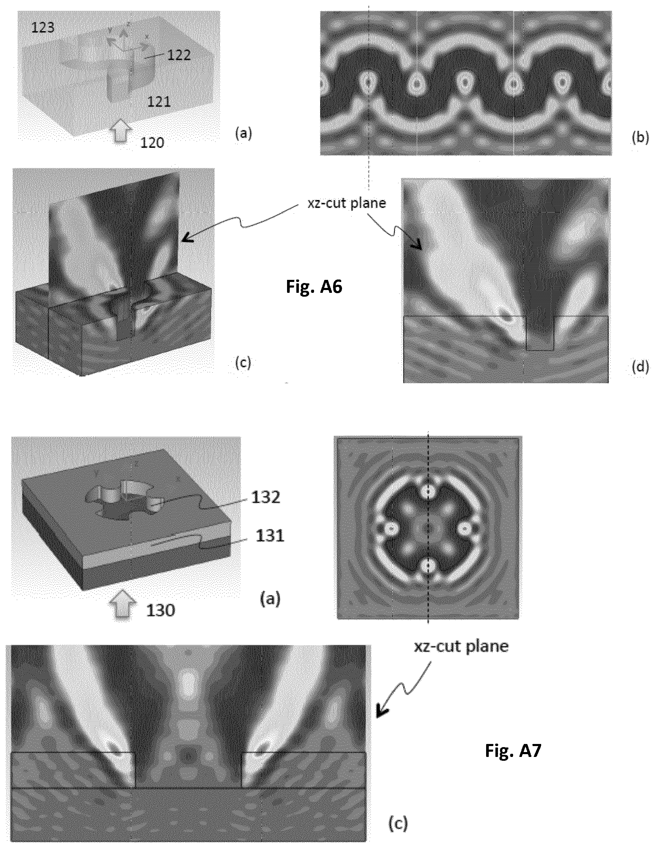

Another example is **Fig. 7A** and **Fig. 7C** representing NJFE in a form of cavity(s) surrounded by solid material with a higher refractive index. Such cavities can be cylindrical or conical with a circular, oval/elliptic, rectangular, pentagons, hexagons, octagons, etc. or cross-type cross-section.

On **Fig. 7A**, the NJFE 13 takes the form of a cavity $18_1$ with a gear-shape cross-section. On **fig. 7C,** the NJFE 13 is formed of a set of four cylindrical cavities $18_2$.

In the embodiments of **fig. 6A-6B,** the NJFE 13 comprises a set of cylindrical pillars with different cross-sections embedded in a single cavity. On **figure 6A**, the NJFE 13 comprises four cylindrical pillars $40_1$ with circular cross-sections, embedded in a single cylindrical cavity 18. On **figure 6B,** the NJFE 13 comprises four cylindrical pillars $40_2$ with rectangular cross-sections, embedded in a single rectangular cavity 18. In such embodiments, where the compound NJFE 13 comprises a group of two or four pillars, it is interesting to set the spacing S between the pillars in the range of $\lambda/10 < S < \lambda/2$, where $\lambda$ is the wavelength of the electromagnetic wave in the structure material, i.e. in the dielectric material forming the pillars (in order to appropriately set the effective refractive index).

**Fig. 8A-8F** illustrate other embodiments showing alternate forms and structures for the NJFE 13. On **figures 8A-8E,** the NJFE 13 has a form of a cylindrical pillar, and of a rib on **figure 8F**. On all these figures, the NJFE 13, whether a cylindrical pillar or a rib, is in a cavity filled in with an effective index composite medium in a form of:

- concentric rings on **fig. 8A,**
- pins on **fig. 8B,**
- rib & pins on **fig. 8C,**
- a set of cylindrical cavities on **fig. 8E,**
- stratified medium comprising plurality of parallel ribs and grooves on **fig. 8D** and **8F.**

In these examples of **fig. 8A-8E,** the NJFE 13 hence takes the form of a wide groove or cavity, filled in with at least one narrow rib or pillar with dimensions smaller than $\lambda/3$, in order to form a composite dielectric material.

**Figures 9A-9C** are side views of a NJFE provided on a bottom surface $15_1$ of a microfluidic channel 10 filled with a fluid medium 11. The grooves which are part of the NJFE 13, either as cavities $18_i$ surrounding a pillar or a set of pillars, or as grooves $19_i$ delimitating ribs, are partly filled with air shown in white color: the fluid medium 11 does not completely fills in the grooves $18_i$-$19_i$, thanks to the hydrophobic properties of such a textured microstructure.

The physical phenomena exploited in the proposed device illustrated through **figures 1-9** are the following:

### 1. NJ beam-forming phenomenon that leads to formation of a focused optical beam.

The basic principle of the near-field focusing by edge diffraction is summarized in **Appendix A.**

### 2. Composite dielectric materials & Effective index model

A composite dielectric material shows an effective refractive index, which is controlled by varying morphology of inclusions of one dielectric material into another dielectric material having different indexes of refraction.

In one embodiment, the refractive index of the bulk material is modified by creating narrow grooves, through-holes, or cavities (i.e. pores). Varying the size, shape, and spacing of the grooves/holes/cavities, different effective index values can be provided inside the groove/cavity surrounding a central pillar of a NJFE, thus enabling for fine tuning of the NJFE focal length, as well as parameters of the NJ beam (i.e. beam width, field intensity enhancement, and beam deviation angle for non-symmetrical structures). All these parameters depend on the index ratio at the lateral surface of the pillar or rib (or more generally on the step of index at the interface between the pillar and groove/cavity regions).

The effective index method provides an additional degree of freedom in the design and fabrication of NJ microlenses. In particular, it allows fabrication of NJ microlenses having longer focal length (up to 10 wavelength), which is not feasible using standard solid dielectric materials. Longer NJ beams are attractive for microfluidic devices with deep channels.

The effective index medium can also be used for fabrication of more complex NJ focusing elements comprising two (or more) regions with different refractive indexes.

The concept of the effective index NJ microstructures is described in further detail in **Appendix B.**

### 3. Wetting behavior of micro-textures

According to J. Jopp et al. ("Wetting behavior of water droplets on hydrophobic microtextures of comparable size," Langmuir, 2004, 20 (23), pp 10015-10019*),* the degree of a fluid penetration into surface grooves of a heterogeneous substrate of air and solids can be controlled by the surface structure geometry and relative pore fraction (i.e. fill factor). In particular, it was demonstrated that periodic arrays of cylindrical pillars and cavities with diameter of 40 to 150nm and pitch size of 200 to 300nm can provide a wetting behavior required for the proposed optical device characterized in that a fluid can rest on a surface of a microstructure (i.e. NJ focusing element) without filling the grooves and/or cavities delimitating a central pillar of a NJFE responsible for the formation of a focused optical beam in its near field zone, so-called nanojet (NJ). These dimensions are also in good agreement with the requirements of the effective index model suggesting a maximum size of the inclusions about 1/3 of the incident wavelength, e.g. 500/3=166nm.

The minimum height of the air-filled portion of the groove/cavity required to enable the NJ beam-forming phenomenon is a half wavelength in the structure bulk material, i.e. $H_a \geq \lambda_0/2n_1$ (See **Fig. 9**).

The present disclosure provides two ways to control the degree of penetration of a fluid into the grooves, namely:

- by reducing the groove/cavity width (the minimum width is about a half wavelength in the structure bulk material, i.e. $W_{min} \sim \lambda_0/n_1$), or
- by filling the grooves/cavities with an effective index medium comprising plurality of narrow posts, ribs or pores.

In the latter case, the beam-forming capabilities of a pillar surrounded by a groove or cavity filled in with an effective index material is defined by the effective index model presented in **Appendix B.** The optimal design of a NJFE should take into account the optical phenomena, as well as wetting behaviour of the texture, and physical properties of the materials (e.g. viscosity of the fluid as well as nature and dimensions of the nanoscale objects).

Main advantages of the proposed optical device compared to standard far-field optical detection methods is that:

- NJ focusing elements can be directly integrated in a microfluidic device with very low additional cost,
- NJ focusing elements can provide several orders of magnitude enhancement in the intensity of the back-reflected light from nanometric objects,
- NJ microstructure can operate in a wide wavelength range, e.g. entire visible range,
- NJ microstructures can be used in a combination with standard far-field focusing devices such as micro-lenses and/or microscope objectives used for illumination and/or optical read-out.

**Appendix A: nanojet fundamentals**

Prior art documents EP 3 223 062 A1, EP 3 223 063 A1 teach one about fundamentals of the nanojet (NJ) phenomenon and its use for the design of so-called NJ microlenses (ML).

According to patent document EP 3 223 062 A1, NJ beam is associated with diffraction of a plane electromagnetic (EM) wave on an edge of a dielectric structure, such as 2D infinite groove (slot, trench) or rib or a 3D cavity or pillar patterned on a surface of a dielectric layer embedded in a host medium, such as gas, liquid or another solid dielectric material (**Fig. A1**).

The NJ beam is generated in a close vicinity of the edge as a result of the interference between the two diffracted waves originating from the two semi-infinite apertures defined with respect to the lateral wall of the step 121, which cuts the incident plane wave in two parts. The NJ beam 55 is always directed toward the medium with a higher index of refraction. Depending on the shape of the step edge line, one or more focused beams 55 and 551-559 can be created in the near-field zone (**Fig. A2**).

In case of a rib or pillar, a single high-intensity NJ beam 55 can be created as a result of recombination of multiple NJ beams originating from different segments of a step edge line, whose parameters (i.e. radiation angle, length, intensity) depend on the size and shape of the focusing elements and the ratio between the index of refraction at the step lateral surface and host medium (**Fig. A3**, which shows the NJ beam formation as a result of a plane wave diffraction on a dielectric element embedded in a dielectric host medium with a lower refractive index).

In case of a vertical step (with a base angle $\alpha$=90°), deviation angle of a NJ beam from the incident wave propagation direction is predicted by the following equation:

$$\theta_B \approx \left(\frac{\pi}{2} - \theta_{TIR}\right)/2 , \quad (B1)$$

where $\theta_{TIR} = sin^{-1}(n_2/n_1)$ is the critical angle for a diopter with indices $n_1$ and $n_2$ ($n_1 > n_2$). For standard dielectric materials (with refractive index 1.2<n<2), the NJ deviation angle can vary in a limited range of about 17 to 30 degree (**Fig. A4,** which shows the NJ radiation angle computed using Eqn. (B1) vs. index ratio at the lateral surface of the step 121).

Knowing the NJ beam deviation angle, one can calculate the focal length of a NJ microlens and thus predict position of the hot spot, which is created as a result of interference between two or more primary NJ beams associated with different segments of the step base edge line (**Fig. A3**).

In case of a NJ microlens in a form of a cylindrical pillar with refractive index $n_1$, radius R and height $H$ embedded in a host medium with refractive index $n_2 < n_1$, the focal length can be estimated as

$$F \approx R/\tan(\theta_B), \qquad (B2)$$

where $\theta_B$ is NJ radiation angle defined by Eqn. (B1).

Dependence of the focal length of a cylindrical NJ microlens versus radius for selected index values and versus index of refraction for selected radius is presented in **Fig. A5.** In the analysis, lens height is fixed as $H$=500nm.

As an example, for the index ratio between the lens and host medium equal to $n_1/n_2$=1.6 (typical for glass in air) the NJ radiation angle predicted by Eqn. (B1) is $\theta_B \approx 25.7$, which corresponds to the focal length nearly equal to the radius of the cylindrical pillar ($F/R \approx 2.1$). The maximum field intensity is achieved for a pillar with the width-to-height ratio of about 1:1. In this case, the jet occurs close to the tip of the NJ microlenses that results in a highest possible numerical aperture (NA).

Note that range of applicability of Eqn. (B2) is limited to the lens with radius varying between 1 and few wavelengths that is the size of the lens for which the NJ beam-forming phenomenon is dominant. Left part of **figure A5** shows the focal length of a cylindrical NJ microlens vs. radius for a set of different index values, right part of **figure A5** shows the focal length of a cylindrical NJ microlens vs. refractive index for a set of different radii.

Summarizing the above, patent documents EP 3 223 062 A1, EP 3 223 063 A1 provide the physical explanations and design guidelines for single-material NJ microlenses, which have been outlined above. This theory has been validated via full-wave EM simulations performed for various shapes and sizes of NJ microlenses as well as via a set of optical tests.

According to patent document EP 3 312 660 A1, a tilted NJ beam can also be generated by a groove (**Fig. A6**) or cavity (**Fig. A7**): the radius of curvature of the groove/cavity edge line determines the field intensity enhancement.

**Appendix B: Composite dielectric materials & effective index model.**

A NJ microlens can be fabricated using a composite dielectric material comprising at least two dielectric materials having different refractive indexes, provided at least one material of these materials is a solid dielectric material and the other(s) is solid, gas, gel, or liquid. The effective refractive index of such a composite material can be controlled by varying morphology of inclusions of one dielectric material into another dielectric material.

In one embodiment, refractive index of a solid dielectric material (being a bulk material of the structure) is modified by creating narrow grooves, through-holes, cavities, or pores (**Figs. B1, B2**). Varying the size, shape, and spacing of the grooves/holes/cavities/pores, different effective index values are provided in a region adjusted to the lateral wall of a NJ focusing element thus enabling a fine-tuning of the NJ beam deviation angle:

$$\theta_B \approx \left(\frac{\pi}{2} - \theta_{TIR}\right)/2, \qquad (B1)$$

where $\theta_{TIR} = \sin^{-1}(n_{eff}/n_2)$ is the critical angle for the interface between two dielectric media, namely a solid dielectric material with refractive index $n_2$ and a composite dielectric material with an effective refractive index $n_{eff}(n_2 > n_{eff})$.

**Fig. B1** presents a schematic drawing of a NJ focusing element ML in a form of combination of two adjacent blocks of dielectric material, one solid and one compound. The optically-transparent device ML of **figure B1** is embedded in a dielectric host medium 101 (refractive index $n_h$), and is placed on a dielectric substrate 102 (refractive index $n_s$). It is illuminated by an electromagnetic wave EM coming from the bottom (i.e. orthogonal to a base surface of the device). The device ML comprises a portion $P_{eff}$ of a composite dielectric material as previously defined, associated with an effective refractive index $n_{eff}$. The width $W_0$ of portion $P_{eff}$ is comprised between $\lambda/2$ and $10\lambda$, with $\lambda$ the wavelength of the electromagnetic wave in the dielectric host medium. In the particular example of **figure B1,** the device ML also comprises a portion $P_b$ of a dielectric material (with refractive index $n_b$). Materials are chosen so that $n_h < n_{eff} < n_b$. In accordance with nanojet beam-forming principles introduced in relation with prior art, a nanojet beam NJ is generated at the interface between portions $P_{eff}$ and $P_b$ of the device ML, originating from the edge between the bottom surface of the device (with respect to the arrival direction of the incident electromagnetic wave EM) and the lateral surface separating the two portions $P_{eff}$ and $P_b$. Arrow 100 illustrates such a NJ beam originating from the bottom edge of the lateral wall between the two blocks. It should be noted that other nanojet beams - not represented on figure B1 for sake of clarity - are also generated respectively at the interface between portion $P_{eff}$ and the host medium, and at the interface between portion $P_b$ and the host medium. The nanojet beam NJ is characterized by its radiation angle $\theta_B$, which depends only on the ratio $n_b/n_{eff}$ in case of a base angle equal to 90°.

As previously described, a composite dielectric material may be formed by inclusions of a first dielectric material having a first refractive index $n_1$ into a second dielectric material having a second refractive index $n_2$ different from the first refractive index $n_1$, in such a way that said composite dielectric material behaves as an homogeneous dielectric material having a effective refractive index $n_{eff}$.

Two ways for implementing such a composite dielectric material (also called effective medium) are now described in relation with **figures B2-A and B2-B:** a porous implementation and a stratified implementation.

In the porous implementation described in relation with **figure B2-A,** some cavities are created within the volume of a bulk material (second dielectric material). For example, the inclusions take the form of substantially spherical cavities (i.e. pores) filled with the first dielectric material (Medium 1) and randomly distributed within said second dielectric material (Medium 2), the diameter of each of said cavities being smaller than $\lambda/2$. Since the cavities have thus dimensions much smaller that one half of the wavelength of the electromagnetic wave in the host medium, the impact of their shape can be neglected. More specifically, according to the effective index model, optical properties of such a dielectric material with sub-wavelength inclusions of another dielectric material can be characterized by means of an effective refractive index $n_{eff}$, which can be defined as a weighted average of the refractive indexes of the two materials. In case of two-phase mixture of non-absorbing materials, a simple Volume Averaging Theory (VAT) can be used, and the effective refractive index can be defined by the formula:

$$n_{eff} = (\phi n_1^2 + (1 - \phi)n_2^2)^{1/2} \qquad (B3)$$

where $\phi \in [0,1]$ is the fill factor, representing the fraction of first dielectric material having refractive index $n_1$ embedded in second dielectric material having refractive index $n_2$.

In the layered implementation described in relation with **figure B2-B,** the composite dielectric material is a stratified medium, the inclusions taking the form of layers of said first dielectric material (Medium 1) interleaved between layers of said second dielectric material (Medium 2). In other words, the composite dielectric material comprises alternating dielectric layers of respective refractive indexes $n_1$ and $n_2$.

In such a case, according to the effective index model, it has been shown that the effective refractive index of the composite dielectric material depends not only on structure parameters of the layers (refractive indexes, thickness), but also on polarization of the electromagnetic wave illuminating the stratified medium. For example, when the stratified medium is illuminated by a plane wave from below, as represented on **figure B2-B,** with E-vector oriented along y-direction (i.e. parallel to the layers) denoted as TE polarization and with M-vector oriented along x-direction (orthogonal to the layers) denoted as TM polarization, two effective refractive indexes $n_{/\!/}$ (for TE polarization) and $n_\perp$ (for TM polarization) can be associated with the composite dielectric material:

$$(B4a) \qquad n_\parallel = (\phi n_1^2 + (1 - \phi)n_2^2)^{1/2}$$

$$(B4b) \qquad n_\perp = \frac{1}{\left(\phi \dfrac{1}{n_1^2} + (1 - \phi)\dfrac{1}{n_2^2}\right)^{1/2}}$$

where $\phi = W_1/(W_1 + W_2)$ is the fill factor of the stratified medium comprising alternating dielectric layers with refractive indexes $n_1$ and $n_2$ and thickness $W_1$ and $W_2$, respectively.

It can be noted that equation Eq.B4a coincides with equation Eq.B3.

According to the effective index model, equations Eq.B4a and Eq.B4b for a stratified medium are valid in a deep-sub-wavelength regime, when the wavelength of the incident wave is much larger than the period of the structure, i.e. $\dfrac{\lambda}{W_1 + W_2} > n = \max\{n_1, n_2\}$.

As may be observed from the above, whatever the way the composite dielectric material is implemented (porous or stratified), the effective refractive index depends on the fill factor of the first dielectric material within said second dielectric material. Thus, by varying parameters such a size, shape, spacing, thickness of the inclusions, one can obtained, from conventional dielectric materials, a composite dielectric material having an effective refractive index that does not belong to the range of refractive indexes available with conventional bulk dielectric materials.

**Figures B3-A and B3-B** illustrate an exemplary embodiment of a NJ focusing element in a form of a cavity 18 filled with air ($n_1$=1) and a block of composite material 80 in a form of parallel ribs/groove embedded in a host medium with refractive index $n_2 > n_1$. More precisely, **fig. B3-A** shows the topology of the NJ element with arrows $14_P$ highlighting NJ beams associated with three edges that belong to the interfaces between the regions having different refractive indexes. **Fig. B3-B** illustrates the near field intensity pattern simulated using 3D-FDTD method illustrating formation of the condensed optical beams by the NJ focusing elements from a plane wave incident from below.

The use of composite dielectric material for NJ focusing elements provides a twofold advantage important for the design of microfluidic devices with integrated optical means proposed by the present disclosure, namely:

- it allows to control the wetting behavior of a channel surface comprising NJ focusing elements. In particular, the presence of narrow ribs or pillars inside a groove (or cavity) surrounding a central pillar of a NJ focusing element prevents fluid from entering the groove. The air remaining at the bottom of the groove/cavity provides a contrast in the refractive index of the central pillar and its surrounding necessary for formation of a NJ beam (see **Fig. 9**).
- it allows to tune parameters of the NJ focusing elements, e.g. vary its focal length. A longer focal length may be required for the use in microfluidic chips with deep channels (more than 10 microns).

These two advantages allow fabrication of microfluidic devices with integrated means for enhanced optical detection based on the NJ phenomenon provided by planar moldable microstructures.

In principle, a block of a composite material can be used for:

∘ creating a pillar (i.e. central part of a NJ focusing element responsible for the formation of the NJ beam) or
∘ filling the groove/cavity surrounding the pillar made of a solid dielectric material. The latter is a preferred option of design of microfluidic devices.

A composite material may comprise inclusions of the same type/shape/size or different.

In a preferred embodiment, the composite material used as filler for the low-index region comprises:

- a plurality of parallel grooves with rectangular or trapezoid cross-section, namely parallel ribs (**Fig. B4-A**) or
- a plurality of pores (cavities) with a cylindrical, conical, or prismatic shape (**Fig. B4-B to B4**-E with (b) rectangular pillar, (c) cylindrical pillars, (d) rectangular cavities, (e) cylindrical cavities).

The NJ beam forming phenomenon at the interface of a solid and composite material is possible under the following conditions:

∘ height of the lateral wall between the two regions filled with solid and composite material: $H \geq \lambda/2$, where $\lambda = \lambda_0/n$ is the wavelength in the corresponding medium,
∘ width of the regions adjusted to the lateral wall (i.e. groove or cavity) is larger than one half of the wavelength in the corresponding medium ($L_1 \geq \lambda/2$ and $L_2 \geq \lambda/2$),
∘ dimensions of the inclusions of the composite material in a plane orthogonal to the EM wave propagation direction is smaller than $\lambda/3$ in the corresponding medium (e.g. the width of the ribs/grooves in **Fig. B2-B** is smaller than $\lambda/3$ of the wavelength, i.e. $W1 < \lambda/3$ and $W2 < \lambda/3$).

Note that:

- NJ beam is always oriented towards a medium with a higher index of refraction,
- The presence of the substrate (underlying the NJ focusing element) does not affect performance of the NJ focusing elements and is usually acting solely as a mechanical support. In case of the excitation light incident from below, the substrate should be at least partly transparent.
- A superstrate (covering the NJ focusing element, e.g. fluid in case of a microfluidic device) does not affect the beam forming conditions, however, it may cause insignificant deviation (e.g. $\pm 5°$) of the NJ beam from the predicted NJ deviation angle.

**Claims**

1. An optical system for use in detecting and imaging at least one nanometric object (12), **characterized in that** it comprises:

- at least one microfluidic channel (10) adapted to be filled in or travelled across by a fluid medium (11) comprising nanometric objects (12), said channel (10) being delimited by at least a bottom wall ($15_1$) and a ceiling wall ($15_2$) positioned opposite to and facing the bottom wall, said bottom wall comprising a transparent substrate;

- at least one nanojet focusing element (NJFE) (13) designed in a form of a surface feature of at least a part of the bottom wall facing the ceiling wall;

- a light source arranged in such a manner that it illuminates the at least one nanojet focusing element (NJFE) through the transparent substrate of the bottom wall and thereby focuses the light as a photonic nanojet (14) inside the fluid medium (11) between the bottom wall ($15_1$) and the ceiling wall ($15_2$); and

- light detection means arranged to measure the light scattered or induced by a nanometric object (12) hit by a photonic nanojet (14), the light scattered or induced returning to the light detection means by first passing through the at least one nanojet focusing element (NJFE) (13).

2. The optical system of claim 1, **wherein** said surface feature comprises at least one central protruding element made of a same material as said transparent substrate and at least one concavity adjacent to said central element and filled with a dielectric material which refractive index is lower than that of said transparent substrate.

3. The optical system of claim 2, **wherein** said central element of said surface feature has a form belonging to the group comprising:

   - a cylindrical or conical pillar with an arbitrary cross-section described by a simple closed curve; or
   - a rib with a straight or curved edge line whose length is much larger than the rib width defined as the distance between the two edge lines of said rib;

   **wherein** said pillar and/or rib is made of a dielectric material with refractive index $n_1$ and delimitated or surrounded by a groove or cavity filled in with a dielectric material having a refractive index $n_2$ smaller than that of the pillar or rib ($n_2 < n_1$).

4. The optical system of any of claims 1 to 3, **wherein** it also comprises at least one nanojet focusing element (NJFE) designed in a form of a surface feature of at least a part of the ceiling wall facing the bottom wall, and **wherein** both nanojet focusing elements formed on the ceiling wall and on the bottom wall are used respectively for illumination of the nanometric objects and read-out of the light scattered or induced by said nanometric objects.

5. The optical system of any of claims 1 to 4, **wherein** it comprises an array of nanojet focusing elements formed on said bottom wall and/or on said ceiling wall.

6. The optical system of claim 5, **wherein** said nanojet focusing elements in said array are arranged so that a nanometric object traveling across said microfluidic channel passes over at least one nanojet focusing element.

7. The optical system of claim 5 or 6, **wherein** dimensions of said array of nanojet focusing elements extend across an entire width of said microfluidic microchannel.

8. The optical system of any of claims 5 to 7, **wherein** a pitch of said array is targeted to be between one and ten wavelengths of an incident light produced by said light source.

9. The optical system of any of claims 5 to 8, **wherein** it comprises at least two parallel microfluidic channels adapted to be filled in or travelled across by a fluid medium comprising nanometric objects, each microfluidic channel comprising an array of nanojet focusing elements, and **wherein** said light source illuminates said at least two parallel microfluidic channels.

10. The optical system of any of claims 5 to 9, **wherein** said array of nanojet focusing elements is formed on said bottom wall and/or said ceiling wall by one of the techniques belonging to the group comprising:

    - molding;
    - lithography;
    - deposition of dielectric particles or microstructures on a surface of said microfluidic channel.

11. The optical system of any of claims 1 to 10, **wherein** the distance ($H_c$) between the ceiling wall and the bottom wall is equal to or smaller than four times a longitudinal dimension ($L_B$) of the photonic nanojet.

12. The optical system of any of claims 1 to 11, **wherein** a dimension of said central element in a direction of propagation of said incident light is targeted to be between half of the wavelength of the incident light and a few wavelengths of the incident light in the dielectric material forming said nanojet focusing element.

13. The optical system of any of claims 11 and 12, **wherein** said surface feature comprises two or more pillars arranged close to each other inside a cavity or delimitated by a single groove.

14. The optical system of claim 1, **wherein** said surface feature is formed by at least a groove or cavity with a straight or curved edge line on said bottom wall.

15. The optical system of claim 14, **wherein** said groove or cavity is filled in with:

- an homogeneous dielectric medium having a refractive index lower than that of the bottom and/or ceiling wall; or
- a composite dielectric material being a mixture of at least two dielectric materials having different indexes of refraction.

**Fig. 1A**

**Fig. 1B**

**Fig. 2**

14

12

11

13

15₃

Flow

y

x

---

$n_4$

$D$

16₂

11

$n_3$

$z$

12

14

$H_C$

14ₚ

**FIG. 3**

$L_B$

$x$

$H$

$F$

$H_a$

18

$n_2$

$W$

16₁

$n_1$

20

$40_1$  18

Fig. 4A  14

$40_2$  18

Fig. 4B  14

$40_3$  18

Fig. 4C  14

$41_1$  $19_1$

$19_2$

Fig. 5A

$41_2$  $19_3$  $19_4$  $19_5$

Fig. 5B

$19_6$  $41_3$  $19_7$

Fig. 5C

18  $40_1$  14

Fig. 6A

$40_2$  18  14

Fig. 6B

**Fig. 7A**

**Fig. 7B** 14

**Fig. 7C** 14

**Fig. 8A**

**Fig. 8B**

**Fig. 8C**

**Fig. 8D**

**Fig. 8E**

**Fig. 8F**

$16_2$

$11$

$10$

**Fig. 9A**

$14$

$15_1$

$18_i$

$16_1$

$16_2$

$11$

$10$

**Fig. 9B**

$14$

$15_1$

$18_i$

$16_1$

**Fig. 9C**

**Figure A1**

**Figure A2**

## Fig. A3

## Fig. A4

## Fig. A5

123
122
121
120
(a)

(b)

xz-cut plane

**Fig. A6**

(c)

(d)

132
131
130
(a)

xz-cut plane

**Fig. A7**

(c)

**FIG. B1**

Fig. B2-A

Fig. B2-B

**Fig. B3-A**

**Fig. B3-B**

(a)　　　　　　　　(b)　　　　　　　　(c)

(d)　　　　　　　　(e)

**Fig. B4**

Europäisches
Patentamt
European
Patent Office
Office européen
des brevets

## EUROPEAN SEARCH REPORT

Application Number

EP 19 17 1651

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/219615 A1 (CUNNINGHAM BRIAN T [US]) 11 September 2008 (2008-09-11) * [0003], [0006], [0009], [0014]-[0016], [0023]-[0024], [0029], [0035], [0049]-[0052], [0055]-[0056], [0061]-[0062], [0064], [0067], [0069], [0080], [0083]-[0084], [0097]-[0099], [0132]; figures 1A-1B, 2A, 2C, 4, 7A * | 1-15 | INV. B01L3/00 B82Y20/00 G01N15/14 G01N21/03 |
| Y,D | WO 2016/020831 A1 (ECOLE POLYTECH [CH]) 11 February 2016 (2016-02-11) * [0001], [0004]-[0005], [0035]-[0036], [0038]-[0045], [0048]; figures 1, 3-5 * | 1-15 | |
| Y | VICTOR V. KOTLYAR ET AL: "Photonic nanojets generated using square-profile microsteps", APPLIED OPTICS, vol. 53, no. 24, 20 August 2014 (2014-08-20), page 5322, XP055357764, WASHINGTON, DC; US ISSN: 0003-6935, DOI: 10.1364/AO.53.005322 * figures 1-3, 6-7 * | 1-15 | TECHNICAL FIELDS SEARCHED (IPC) B01L B82Y G01N |
| A,D | EP 3 223 063 A1 (THOMSON LICENSING [FR]) 27 September 2017 (2017-09-27) * [0174]; figures 14-15, 17-19, 21-22 * | 1-15 | |

-/--

The present search report has been drawn up for all claims

| Place of search | Date of completion of the search | Examiner |
|---|---|---|
| Munich | 22 October 2019 | Mason, William |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

| | Europäisches Patentamt European Patent Office Office européen des brevets | **EUROPEAN SEARCH REPORT** | Application Number EP 19 17 1651 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ARTEM BORISKIN ET AL: "Near field focusing by edge diffraction", OPTICS LETTERS, vol. 43, no. 16, 15 August 2018 (2018-08-15), page 4053, XP055634346, US ISSN: 0146-9592, DOI: 10.1364/OL.43.004053 * figure 4 * | 1-15 | |
| A | WO 2018/073407 A1 (THOMSON LICENSING [FR]) 26 April 2018 (2018-04-26) * figure 12 * | 1-15 | |
| A | WO 2017/098079 A1 (KASSAMAKOV IVAN [FI] ET AL) 15 June 2017 (2017-06-15) * figures 1-2 * | 1-15 | |
| A,D | EP 3 223 062 A1 (THOMSON LICENSING [FR]) 27 September 2017 (2017-09-27) * [0113],[0117]-[0118,][0128],[0162], [0172],[0214]-[0216],[0221]; figures 2-4, 8, 12, 29 * | 1-15 | TECHNICAL FIELDS SEARCHED (IPC) |

The present search report has been drawn up for all claims

| Place of search | Date of completion of the search | Examiner |
|---|---|---|
| Munich | 22 October 2019 | Mason, William |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 19 17 1651

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2019

| Patent document cited in search report | | Publication date | Patent family member(s) | | Publication date |
|---|---|---|---|---|---|
| US 2008219615 | A1 | 11-09-2008 | AU | 2007319975 A1 | 22-05-2008 |
| | | | CA | 2668943 A1 | 22-05-2008 |
| | | | EP | 2091646 A1 | 26-08-2009 |
| | | | JP | 5166430 B2 | 21-03-2013 |
| | | | JP | 2010509590 A | 25-03-2010 |
| | | | NZ | 576760 A | 28-10-2011 |
| | | | US | 2008219615 A1 | 11-09-2008 |
| | | | US | 2008265137 A1 | 30-10-2008 |
| | | | WO | 2008060415 A1 | 22-05-2008 |
| WO 2016020831 | A1 | 11-02-2016 | NONE | | |
| EP 3223063 | A1 | 27-09-2017 | CN | 108885354 A | 23-11-2018 |
| | | | CN | 109313353 A | 05-02-2019 |
| | | | EP | 3223063 A1 | 27-09-2017 |
| | | | EP | 3433663 A1 | 30-01-2019 |
| | | | EP | 3433664 A1 | 30-01-2019 |
| | | | JP | 2019511746 A | 25-04-2019 |
| | | | JP | 2019516124 A | 13-06-2019 |
| | | | KR | 20180121924 A | 09-11-2018 |
| | | | KR | 20190004703 A | 14-01-2019 |
| | | | US | 2019101769 A1 | 04-04-2019 |
| | | | WO | 2017162880 A1 | 28-09-2017 |
| | | | WO | 2017162882 A1 | 28-09-2017 |
| WO 2018073407 | A1 | 26-04-2018 | CN | 109844579 A | 04-06-2019 |
| | | | EP | 3312646 A1 | 25-04-2018 |
| | | | EP | 3529646 A1 | 28-08-2019 |
| | | | US | 2019250315 A1 | 15-08-2019 |
| | | | WO | 2018073407 A1 | 26-04-2018 |
| WO 2017098079 | A1 | 15-06-2017 | CA | 3006467 A1 | 15-06-2017 |
| | | | CN | 108779976 A | 09-11-2018 |
| | | | EP | 3387368 A1 | 17-10-2018 |
| | | | JP | 2018537695 A | 20-12-2018 |
| | | | US | 2018372476 A1 | 27-12-2018 |
| | | | WO | 2017098079 A1 | 15-06-2017 |
| EP 3223062 | A1 | 27-09-2017 | CN | 109073910 A | 21-12-2018 |
| | | | EP | 3223062 A1 | 27-09-2017 |
| | | | EP | 3433665 A1 | 30-01-2019 |
| | | | JP | 2019512743 A | 16-05-2019 |
| | | | KR | 20180123504 A | 16-11-2018 |
| | | | US | 2019101700 A1 | 04-04-2019 |
| | | | WO | 2017162881 A1 | 28-09-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016020831 A1
- WO 2017162881 A
- EP 3312660 A
- EP 3223062 A1
- EP 3223063 A1
- EP 3312660 A1

**Non-patent literature cited in the description**

- **H. YANG et al.** Micro-optics for microfluidic analytical applications. *Chem. Soc. Rev.,* 2018, vol. 47, 1391-1458
- **J. LIM et al.** Micro-optical lens array for fluorescence detection in droplet-based microfluidics. *Lab Chip,* 2013, vol. 13, 1472-1475
- **Y. LIU et al.** Photonic crystal-based all-optical on-chip sensor. *Opt Express,* 2012, vol. 20 (18
- **O. TOKEL et al.** Portable microfluidic integrated plasmonic platform for pathogen detection. *Nature Sci Rep.,* 2015, vol. 5, 9152
- **H. YANG et al.** Photonic nanojet array for fast detection of single nanoparticles in a flow. *NanoLetters,* 2015, vol. 15 (3), 1730-1735
- **J. JOPP et al.** Wetting behavior of water droplets on hydrophobic microtextures of comparable size. *Langmuir,* 2004, vol. 20 (23), 10015-10019